# EUROPEAN PATENT APPLICATION

(11) **EP 1 905 786 A1**
(43) Date of publication of application: **02.04.2008**
(21) Application number: 06121478.9
(22) Date of filing: 29.09.2006
(51) Int. Cl.: C08F 12/08, C08F 4/80

(54) **Novel metal catalysts comprising nitrogen-containing aromatic ligands and use thereof**

(71) Applicant: Universiteit van Amsterdam, 1000 GG Amsterdam (NL)
(72) Inventor: Dominguez-Gutierrez, David, 28804 Alcala de Henares (ES); Eiser, Erika, 1405 EL Bussum (NL); Elsevier, Cornelis Johannes, 3722 BL Bilthoven (NL)
(74) Representative: van Heuvel, Margaretha

(57) **Abstract**

The present invention discloses a metal catalyst for living radical polymerization having a structure M²⁺(Y)₄(X)₂ wherein M is a transition metal selected from the group of Mn, Fe, Co, Zr, Ru, Rh and Os, each Y independently is a nitrogen-containing aromatic mono-ring ligand, at least one ring being substituted on at least one position with a carbon-containing substituent and, optionally, either two or four ligands Y being covalently bonded to each other in pairs, and X is selected from H₂O, CH₃CN, (CH₃)₂SO, NH₃, and a mono-, di- or tri (C₁-C₄)-alkyl amine. A preferred catalysts is [Ru(H₂O)₂(4,4'-dialkyl-2,2'-dipyridyl)₂](NO₃)₂. The catalyst advantageously enables the synthesis of polymers with high molecular weights and low polydispersities from monomer compounds containing a vinyl group.

## Description

The present invention relates to the field of metal catalysts with nitrogen-containing ligands and use thereof, for instance for catalyzing living radical polymerization.

Radical polymerization processes have witnessed a great progress in the past 50 years along with the development of organometallic catalysts. In general, transition-metals catalyse these reactions at low temperatures, working at high rates and tolerating protic compounds such as water. Ruthenium compounds are amongst the most studied versatile catalysts employed in radical polymerizations. Their efficiency has been attributed to the variety of oxidation states that ruthenium can assume during catalytic processes and the relatively low redox potential between its main oxidation states. This explains the variety of proficient ruthenium-catalysts carrying various ligands that have been employed in polymerization reactions. The first ruthenium-containing complexes used were of type [RuCl₂(PR₃)ₙ] and ever since, a continuous development aims at controlling their activity, stability and chemoselectivity (see for instance Kamigaito et al, 2001, Chem. Rev. 101, 3689-3745). This is normally done by finding a suitable equilibrium between the electronic and steric environment around the metal. In this way, a great variety of ligands has been studied, among which phosphines, Schiff bases and half-metallocene complexes stood out as the most efficient ones.

Nitrogen-containing ligands containing pyridine groups constitute the most prolific class of ligands utilised in copper-assisted radical polymerization (see Kamigaito et al, 2001). The diverse types of functionalities tested exemplify the effort to increase the solubility of the catalysts in an attempt to enhance the rates and molecular weight distributions of the polymers. For instance, the alkyl chains attached to the pyridine rings have been fine-tuned: by testing shorter, longer, linear, branched and altered chains, the rates have been improved significantly.

In an effort to upgrade the control of the growing polymer chain, the influence of the solvent in emulsion systems was studied. In copper-catalysed processes, CuX₂(bpyR₂) catalysts were employed where the bpyR₂ ligand has long chains. In this way, the catalyst is retained in the organic phase, and polymers with good polydispersities were obtained. In addition, the combination of these ligands with non-ionic surfactants resulted in polymers with controlled chain growths and narrow molecular weight distributions.

The present invention discloses novel transition metal catalysts containing nitrogen-containing aromatic ligands that enable the synthesis of polymers with high molecular weights and low polydispersities. Contrary to (copper) catalysts in emulsions, the catalyst of the invention does not require the presence of a surfactant.

Collomb-Dunand-Sauthier et al, 1996 (J. Electroanalytical Chemistry, 410, 21-29) disclose the electrochemical behaviour of three Ru(II) complexes with substituted 2,2'-bipyridine ligands in a non-coordinating solvent. However, nothing is said about the use of these compounds as a catalyst for polymerization.

In a first aspect, the present invention discloses a metal catalyst for living radical polymerization having a structure M²⁺(Y)₄(X)₂ wherein M is a transition metal selected from the group of Mn, Fe, Co, Zr, Ru, Rh and Os, each Y independently is a nitrogen-containing aromatic mono-ring ligand, at least one ligand Y being substituted on at least one position with a carbon-containing substituent and, optionally, either two or four ligands Y being covalently bonded to each other in pairs, , and X is chosen from H₂O, CH₃CN, (CH₃)₂SO, NH₃, and a mono-, di- or tri(C₁-C₄)-alkyl amine, with the proviso that the metal catalyst is not Ru²⁺(L¹)₂(OH₂)₂, Ru²⁺(L²)₂(OH₂)₂ and Ru²⁺(L³)₂(OH₂)₂, wherein L¹, L² and L³ have the structures as follows:

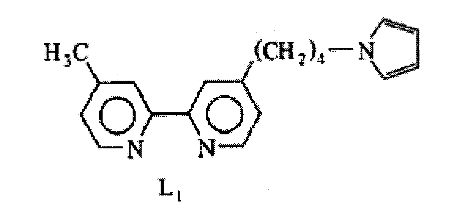

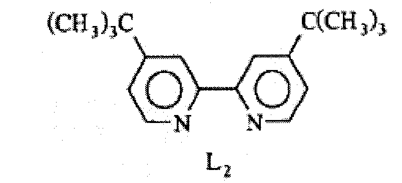

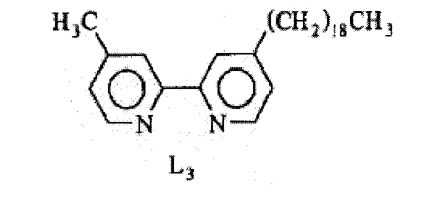

The transition metal M of the catalyst preferably is Ru.

In the metal catalyst, the nitrogen atom of each nitrogen-containing aromatic mono-ring ligand Y is coordinated to the metal.

In one embodiment, two or four aromatic mono-rings are covalently bonded to each other in pairs. In this embodiment, the catalyst may comprise two pairs of covalently bonded rings or one pair of covalently bonded rings and two "free" rings.

In one embodiment, the nitrogen-containing aromatic ligand Y is a pyridine.

In a preferred embodiment, two pyridine rings are covalently bonded to each other, wherein the catalyst comprises one or two pairs of covalently bonded pyridine rings.

A covalent bond between two pyridine rings may involve one carbon atom of each pyridine ring, as in the structure C-Bₙ-C wherein the C's are part of different pyridine rings, n may be 0 or 1, and when n is 1, B is C-D-C, wherein D is selected from C, Si, N or S. An example of two pyridine rings covalently bonded to each other is a dipyridine. Such a covalent bond preferably involves the carbon atom at the 2-position of each ring, such as a 2,2'-dipyridine, which is a preferred structure.

The covalent bond between two pyridine rings may also involve two carbon atoms of each pyridine ring, preferably the carbon atoms at the 2- and 3-position of each ring, for instance as in a phenantroline.

At least one nitrogen-containing aromatic ligand Y ring is substituted with at least one carbon-containing substituent. The substituent may be present at any carbon that does not participate in a covalent bond with an adjacent ring, with a maximum of two substituents per ring. It is also possible to have two substituents in one ring and none in an adjacent ring. Preferably, the substituent is present at the 4 position of a pyridine ring, more preferably at the 4 position of all pyridine rings.

The carbon-containing substituent preferably is an aliphatic, heteroaliphatic or aliphatic-aromatic moiety that may be branched or straight, saturated or unsaturated and/or may contain a heteroatom like O, S, Si and/or N, as an end group or within the chain or aromatic ring, and/or F as a substituent of one or more hydrogen atoms of a hydrocarbon moiety. More preferably, the carbon-containing substituent comprises 1 to 32 carbon atoms. Even more preferably, the substituent is an alkyl group of 1 to 32 carbon atoms, most preferably of 10 to 20 carbon atoms, especially preferably an alkyl group having a straight chain.

Examples of suitable substituent configurations are shown below, as exemplified on dipyridine (L-1). The linear chain configuration as shown below is an example and may suitably be extended to a length as desired.

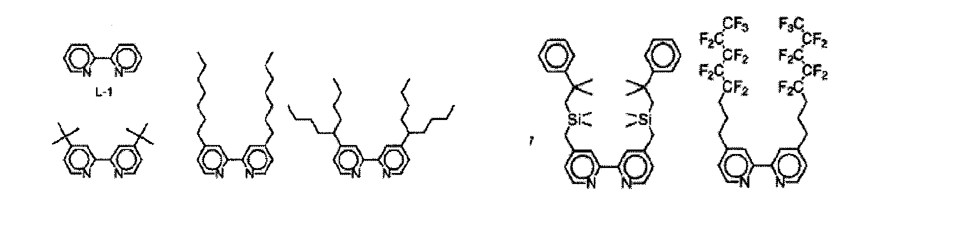

A preferred structure for two substituted covalently bonded ligands Y is 4,4'-dialkyl-2,2'-dipyridyl. The alkyl group preferably is a linear chain of 1 to 32 carbon atoms, more preferably of 10-20 carbon atoms.

The ligand X is chosen from H₂O, CH₃CN, (CH₃)₂SO, NH₃, and a mono-, di- or tri(C₁-C₄)alkyl amine, such as diisopropylamine or triethylamine. Preferably, X is chosen from H₂O, CH₃CN and (CH₃)₂SO, more preferably the ligand X is H₂O.

The counter ion of the metal catalyst of the invention may be any suitable ion, for instance NO₃⁻, SO₄²⁻, CF₃SO₃⁻, CF₃COO⁻, BF₄⁻, SbF₅⁻, PF₆⁻.

A preferred catalyst according to the invention is a Ru catalyst comprising two dipyridyl ligands substituted at the 4 positions with a saturated alkyl group of 1 to 32 carbon atoms, preferably from 10 to 20 carbon atoms, and two H₂O molecules, the counter ion being NO₃⁻, such as [Ru(H₂O)₂(4,4'-diheptadecyl-2,2'-dipyridyl)₂] (NO₃)₂ and [Ru(H₂O)₂(4,4'-ditridecyl-2,2'-dipyridyl)₂](NO₃)₂.

It is known that a way to improve the performance of a catalyst in controlled transfer radical polymerizations is by employing surfactants. Occasionally, this can lead to higher yields, but it mostly results in polymers of higher molecular weights and broader polydispersities.

Surprisingly, a catalyst with an apolar substituent at the pyridine ring advantageously may undergo self-aggregation and does not require the presence of a surfactant. Thus, such a catalyst acts both as a catalyst and as a surfactant. Aggregation of the catalyst may be influenced by various conditions, like solvent composition, solvent polarity, temperature, pressure, catalyst structure, in particular the nature of the substituent group. The detection of aggregates is done routinely with a dynamic light scattering setup.

The nature of the substituent group, in particular the chain length of a linear chain, advantageously may be varied to obtain the appropriate solubility and/or aggregation characteristics of the catalyst in the solvent of choice. A longer linear chain length, e.g. C₁₇ or longer, enables the catalyst to form self-assembled aggregates in a solvent, e.g. toluene, styrene and/or hexane. An example of such a catalyst is [Ru (H₂O)₂(4, 4' -diheptadecyl-2,2'-dipyridyl)₂](NO₃)₂. Catalysts with a shorter chain length, e.g. a linear C₁₃-tail or shorter, for example [Ru(H₂O)₂(4,4'-ditridecyl-2,2'-dipyridyl)₂] (NO₃)₂, do not self-assemble in e.g. toluene or styrene, but may do so in e.g. hexane.

Aggregated catalysts advantageously cause the formation of microemulsions. A favourable aspect of using a catalyst that self-aggregates is that surfactants will not be needed to form the desired microemulsions, thereby employing less chemicals and reducing chemical waste.

In microemulsions, polymers tend to grow in a controlled way until the polymer becomes too large to be confined to the emulsion droplet containing the catalyst. Typically, in microemulsions polymers of very high molecular weights can be obtained, because they promote the miscibility between catalyst and polymer. However, this miscibility often may not be efficient and polymers may possess a very high polydispersity making them useless in various applications. Surprisingly, catalysts of the present invention both in emulsions and in homogeneous solutions enable the preparation of large polymers with a relatively low polydispersity.

Thus, the catalysts of the invention can work in homogeneous solutions as well as in microemulsions.

In a second aspect, the present invention provides a method for preparation of the catalyst of the first aspect.

The catalyst conveniently may be prepared by a combination of known methods.

The ligand Y may be reacted with a metal halide to obtain a metal-ligand Y complex. The metal complex then is digested with silver ions and a compound for occupation of the X position is added, to obtain the metal catalyst. The metal catalyst may be recovered from the reaction mixture by any method know to the person skilled in the art.

A ligand substituted with alkyl chains in the longer range may be synthesized from a precursor ligand substituted with short alkyl groups (methyl, ethyl) by treating this precursor with a lithiating agent followed by reaction with the appropriate halogenated precursor to obtain substituents with the desired size. For instance, see Ellison and Iwamoto (1983), Tetrahedron Lett. 24, 31 for the synthesis of symmetric dipyridines and G. Chelucci and R. P. Thummel (2002), Chem. Rev. 102, 3129-70 for the synthesis of asymmetric dipyridines. Alternatively, a ligand substituted with an -OH group may be reacted with a suitable halogenated precursor in the presence of a base, for instance see A. Bellusci et al. (2005), Inorganic Chemistry 44(6), 1818-25 and J. Skarzewski et al (1979) Heterocycles 12, 1403-6.

In particular, a suitable ligand with small alkyl groups is 4,4'-dimethyl-2,2'-bipyridyne, which may be reacted with lithium diisopropylamide at -70°C, followed by addition of the appropriate halogenated substituent precursor, e.g. 1-bromohexadecane.

The metal halide for reaction with the ligand Y may be MQₙ (n = 1, 2 or 3) (Q = C1, Br or I), preferably Q = C1, more preferably the metal halide is MCl₃. The solvent for the reaction is a polar solvent (such as water, methanol, ethanol, ethyleneglycol, DMF, DMSO). The reaction may occur at a temperature of 60 to 140 °C for a period of 8 to 48 hours.

The obtained ligand Y-metal complex is treated in analogy to a procedure reported by Chi-Ming Che and Wai-Ho Leung (1987), J.Chem. Soc., Chem. Commun., 1376-7. Briefly, it is digested with a silver salt, wherein the counter ion of the silver cation suitably defines the counter ion for the catalyst. Preferably, a stoichiometric amount of silver salt is used. Then, a suitable compound is added that defines the ligand present in position X of the catalyst of the invention.

The obtained catalyst may be recovered by filtering the mixture through a plug of celite and evaporating volatiles on a rotavapor. The resulting solid may be dried under vacuo for 24 hours.

In a third aspect, the present invention provides the use of the catalyst of the previous aspect for preparing polymers of vinyl group-containing monomers. The catalyst of the invention advantageously allows the preparation of polymers that have a high molecular weight (up to 1.5x10⁶ Dalton) and a low polydispersity (between 1.2 and 1.9) and that are atactic.

In particular, the present invention provides a process for polymerization of vinyl group containing monomers to form a (co)polymer comprising the step of polymerizing the vinyl group-containing monomers in the presence of the metal catalyst of the first aspect.

Suitable monomer compound containing a vinyl group to be used in the process of the invention are acrylate, methacrylate and/or styrene monomers. Single monomers or mixtures of two or more monomers may be used. Examples of suitable acrylate, methacrylate and styrene momoners are given below.

### Acrylates:

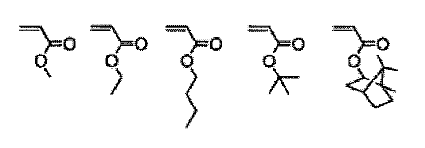

### Methacrylates:

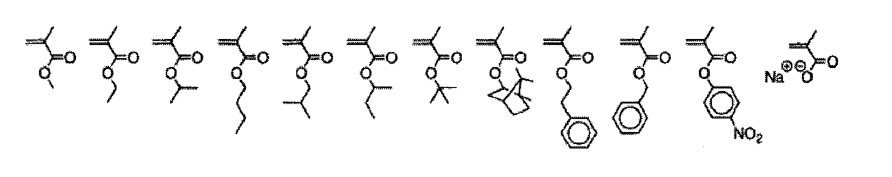

### Styrenes:

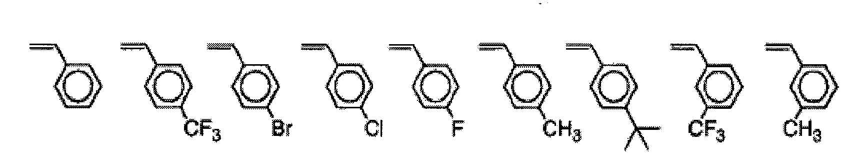

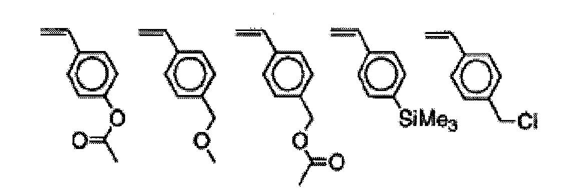

The polymerization reaction, which is due to radical transfer, may be performed in the presence or absence of a radical initiator. Although the polymerization also functions when an initiator (for example CHI₃, CCl₃Br, or Cl₃CCOOMe) is added, its presence may slow down the polymerization reaction. Therefore, the polymerization works more efficiently in the absence of an initiator, which is beneficial since initiators are in general toxic compounds. This aspect contradicts the copper-catalyzed process known in the art, where initiators are always necessary. In particular, complexes of the [Ru(bpyR₂)₂(H₂O)₂]²⁺ type presented here are excellent catalysts for radical transfer polymerization not needing the aid of initiators. Thermal initiation, although slower, is sufficient to conduct the reaction.

The polymerization reaction may be carried out in a pure liquid form of the polymerizable monomer (bulk solution or neat substrate), for instance a styrene liquid, or in a solution of the polymerizable monomer in a suitable solvent, like toluene. Typically, polymer molecular weights will be higher when reactions are performed in bulk solution with respect to solutions where monomer is diluted in solvent.

The reaction works in the presence of O₂ as well as under a inert gas (N₂) atmosphere.

The polymerization may be performed in a range of temperatures between 20°C and 150°C, but is preferably performed at a temperature of 40°C to 130 °C. Typically, the temperature may be tuned to obtain either a high molecular weight polymer or a high conversion. In living radical polymerizations, working at a higher temperature results in an increment of the concentration of reactive species, which accounts for a higher conversion. An additional effect of the temperature in controlled radical polymerizations is that the average molecular weight of a polymer decreases as the temperature increases.

A similar relation exists between catalyst concentration, conversion and molecular weight of the polymer. The higher the catalyst concentration, the higher the conversion and the lower the molecular weight. Typically, the catalyst concentration may vary between 10⁻⁷ and 10⁻¹ M, but will preferably range between 10⁻⁵ and 10⁻³ M.

The monomer concentration in solvent may have values as low as 10⁻³ M, but they are preferably carried out in neat substrate.

The polymerization reaction may proceed from 1 up to 72 hours, preferably between 2 and 48 hours.

After all monomers in a solution are polymerized, the catalyst is still alive. This means that when fresh monomers are added the polymerization will continue.

The catalyst of the present invention advantageously allows the preparation of polymers with molecular weights (M_{w}) reaching about 1.5x10⁶ Dalton. These high molecular weights are overwhelmingly higher than typical molecular weights found in common living radical polymerization, which range between 50,000 and 80,000. Molecular weights ranging from about 50,000 up to 1.5×10⁶ Dalton may be reached depending on the concentration of the catalyst and the polymerization temperature. Molecular weights of resulting polymers typically may be analyzed by Size Exclusion Chromatography coupled to MultiAngle Laser Light Scattering (SEC-MALLS).

The polydispersity of the polymers varies between 1.2 and 1.9 for molecular weights between 40,000 and 1.5×10⁶ Dalton.

### Brief description of the Figures

**Figure 1**. Conversion vs. catalyst concentration in the polymerization of styrene at T = 70°C with **2a** (A) and **2b** (■).
**Figure 2**. Polystyrene molecular weight vs. log (catalyst concentration) in the polymerization of styrene at T = 50°C with **2a** (▲) and **2b** (■).
**Figure 3.** Polystyrene molecular weight vs. log (catalyst concentration) in the polymerization of styrene at T = 70°C with **2a** (A) and **2b** (■).
**Figure 4.** Conversion vs. temperature in the polymerization of styrene at [cat] = 10⁻⁴ M with **2a** (▲) and **2b** (■).
**Figure 5**. Polystyrene molecular weight vs. temperature in the polymerization of styrene at [cat] = 10⁻⁴ M with **2a** (A) and **2b** (■).

### Experimental

**Polymer analyses.** Polystyrenes were analysed using SEC-MALLS with IR detection to perform absolute Mw determination using ASTRA software (version 4.50, Wyatt Technology Corp., Santa Barbara, CA). The light scattering detector was a DAWN DSP-F (Wyatt Technology Corp., Santa Barbara, CA), refractive index detector Shimadzu RID-10A (Shimadzu, 's Hertogenbosch, The Netherlands). The column set for SEC consisted of three 300x7.5mm Mixed-B PL gel columns in series (Polymer Laboratories, Church Stretton, Shropshire, UK). Unstabilised tetrahydrofuran from Biosolve (Valkenswaard, The Netherlands) was used as the mobile phase.

**General.** All synthetic experiments with metal complexes and dipyridine ligands were performed under an atmosphere of dry nitrogen using standard Schlenk techniques. All non-deuterated solvents, reagent grade or better were dried according to standard previous procedures under an atmosphere of nitrogen. Deuterated solvents were used as received. Commercially available reagents were used as received, except styrene, which was dried by three consecutive freeze-pump-thaw cycles and stored under N₂ atmosphere at 4°C.

¹H and ¹³C{¹H} NMR spectra were recorded at 300.13 and 75.48 MHz, respectively, using a Varian Unity 300 MHz spectrometer. Unless otherwise stated, the NMR measurements were performed in CDCl₃· ¹H and ¹³C{¹H} NMR are reported in parts per million high frequency from an external reference of tetramethylsilane.

### Example 1

### Synthesis of ruthenium complexes

**4,4'-ditridecyl-2,2'-dipyridine (a) and 4,4'-diheptadecyl-2,2'-dipyridine (b).** We decided to use 4,4'-(dialkyl)-2,2'-dipyridyl ligands for the synthesis of ruthenium-based catalysts where alkyl stands for *n*-C₁₃H₂₅ and *n*-C₁₇H₃₅. The synthesis of these ligands (**a** and **b**) proceeds smoothly in good yields at low temperatures (-78°C) using lithium diisopropylamide as lithiating agent, followed by 1-bromododecane (or hexadecane) while keeping the temperature low.

**4,4'-ditridecyl-2,2'-dipyridine (a).** A 1.6 M solution of *n*-butyllithium in hexane (5.12 ml, 8.2 mmol) was added dropwise to a suspension of diisopropylamine (1.13 ml, 8.0 mmol) in THF (5 ml) at -78°C and allowed stirring for 30 min. At - 78°C, 4,4'-dimethyl-2,2'-dipyridine (0.73 g, 4 mmol) in THF (30 ml) was slowly (30 min) added and stirred for additional 2 h. The suspension was warmed to 0°C, 1-dodecylbromide (2.63 g, 10 mmol) in THF (5 ml) added. After stirring for one hour at 0°C, the solution was allowed to reach room temperature while stirring for 16 hours. Methanol (10 ml) was added and the solution stirred for 10 minutes to quench it. Water (100 ml) was added and the organic phase extracted with diethylether (3 x 100 ml). The combined organic fractions were dried over Na₂SO₄, filtered and the solvent evaporated. The product can be purified upon recrystallisation in pentane to obtain an off-white powder which was filtered and dried under vacuum. Yield: 1.44 g (69%).

¹H NMR (CD₂Cl₂) : δ 0.86 (t, 6H, ²*J*_{HH} = 6. 6 Hz C*H*₃(CH₂)₁₂), 1.30-1.70 (br m, 44H, CH₃(C*H*₂)₁₁), 2.70 (t, 4H, ²*J*_{HH} = 8.1 Hz, C*H*₂Ar), 7.16 (dd, 2H, ²*J*_{HH} = 4.8 Hz, ⁴*J*_{HH} = 1.5 Hz, H*-5,5'), 8.26 (d, 2H, ²*J*_{HH} = 0.9 Hz, H*-3,3'), 8.56 (dd, 2H, ²*J*_{HH} = 4.8 Hz, ⁴*J*_{HH}= 0.6 Hz H*-6,6'). ¹³C{¹H}: δ 14.34 (*C*H₃), 22.91 (CH₃*C*H₂), 29.55 (*C*H₂CH₂CH₂Ar), 29.87 (CH₃(CH₂)₂(*C*H)₆), 30.66 (*C*H₂CH₂Ar), 32.13 (CH₃CH₂*C*H₂), 35.79 (*C*H₂Ar), 121.81 (*C*5), 124.30 (*C*3), 148.91 (*C*6), 153.66 (C4), 155.78 (C2).

**4,4'-diheptadecyl-2,2'-dipyridine (b).** A 1.6 M solution of *n*-butyllithium in hexane (6.75 ml, 10.8 mmol) is added dropwise to a suspension of diisopropylamine (1.48 ml, 10.5 mmol) in THF (5 ml) at -78°C, warmed up to 0°C and allowed stirring for 30 min. A solution of 4,4'-dimethyl-2,2'-dipyridine (0.73 g, 4 mmol) in THF (30 ml) was then dropwise added and stirred for additional 2 h. followed by addition of 1-hexadecylbromide (3.06 g, 10 mmol) in THF (5 ml). The resulting suspension was stirred for additional 1 h at 0°C. The bath was then removed and allowed reaching room temperature overnight. Upon addition of methanol (10 ml) the reaction was quenched, water (100 ml) was added and the organic phase extracted with diethylether (3 x 100 ml). The combined organic fractions were dried over MgSO₄, filtered and volatiles removed by rotary evaporation. Resulting combination of organic layers was dried with anhydrous Na₂SO₄, filtered, evaporated and the residue recrystallised from heptane to obtain an off-white powder which was filtered and dried under vacuum. Yield: 59.3 g (73%).

¹H NMR: δ 0.86 (t, 6H, ²*J*_{HH} = 6.9 Hz, C*H*₃(CH₂)₁₆), 1.30-1.70 (br m, 60H, CH₃(C*H*₂)₁₅), 2.68 (t, 4H, ²*J*_{HH} = 7.8 Hz, C*H*₂Ar), 7.13 (dd, 2H, ²*J*_{HH} = 5.1 Hz, ⁴*J*_{HH}= 1.5 Hz, H*-5,5'), 8.23 (d, 2H, ²*J*_{HH}= 0.9 Hz, H*-3,3'), 8.55 (dd, 2H, ²*J*_{HH} = 4.8 Hz, ⁴*J*_{HH} = 0.6 Hz, H*-6,6'). ¹³C{¹H} δ 14.36 (*C*H₃), 22. 93 (CH₃*C*H₂), 29. 93 (CH₃(CH₂)₂(*C*H)₁₁), 30.68 (*C*H₂CH_{z}Ar), 32.15 (CH₃CH₂*C*H₂), 35.79 (CH₂Ar), 121.72 (C5), 124.26 (C3), 149.01 (C6), 153.52 (C4), 155.96 (C2).

**[Ru(4,4'-ditridecyl-2,2'-dipyridine)₂Cl₂] (1a) and [Ru(4,4'-diheptadecyl-2,2'-dipyridine)₂Cl_{2]} (1b).** Reacting RuCl₃ with two equivalents of the corresponding ligand in DMF at 120°C results in the RuCl₂(bpyR₂)₂ complexes **1a** and **1b** (scheme 1). These complexes have been purified by means of size-exclusion chromatography. The use of stoichiometric amounts of ligand is crucial in order to avoid the formation of side products containing an undesired number of ligands that cause major decreases of the yields.

**[Ru(4,4'-ditridecyl-2,2'-dipyridine)₂Cl₂] (1a).** A mixture of RuCl₃·3H₂O (83.7 mg, 0.32 mmol), 4,4'-di(tridecyl)-2,2'-dipyridine (0.333 g, 0.64 mmol) and LiCl (80.5 mg, 1.9 mmol) in DMF (10 ml) was heated to 110°C during 6 h. The reaction was cooled down, acetone (30 ml) added and the solution was further cooled to -20°C. The precipitate formed was filtered off and washed with water (3 x 20 ml). The residue was purified twice on Sephadex LH20 with a acetonitrile/isopropanol (1:9) mixture to obtain **1a** as a purple solid. Yield 0.32 g (82%).

¹H NMR gave broad signals. ¹H NMR: δ 0.88 (m, 12H, C*H*₃(CH₂)₁₂), 1.18-1.80 (br m, 88H, CH₃(C*H*₂)₁₁), 2.89 (br s, 8H, C*H*₂Ar), 7.20-7.30 (br m, 4H, H-5,5'), 7.54-7.61 (br m,, 4H, H-3,3'), 8.33 (br s, 4H H-6, 6') . (FAB,⁺): m/z = 1141. 93 [M-2Cl⁻]⁺. Anal. Calcd for C₇₂H₁₂₀Cl₂N₄Ru: C, 71.25; H, 9.97; N, 4.62. Found: C, 70.78; H, 9.66; N, 4.88.

**[Ru(4,4'-diheptadecyl-2,2'-dipyridine)₂Cl₂] (1b).** A mixture of RuCl₃·3H₂O (63 mg, 0.24 mmol), 4,4'-diheptadecyl-2,2'-dipyridine (0.305 g, 0.48 mmol) and LiCl (59.35 g, 1.4 mmol) in DMF (10 ml) was heated to 110°C during 8 h. The reaction was cooled down; acetone (30 ml) added and then cooled further to - 20°C. The precipitate formed was filtered off and washed with water (3 x 20 ml). The residue was purified twice on Sephadex LH20 using isopropanol/acetonitrile mixture (9:1) to obtain **1b** as a purple solid. Yield 0.283 g (82%).

¹H NMR gave broad signals. ¹H NMR: δ 0.87 (m, 12H, C*H*₃(CH₂)₁₆), 1.20-1.80 (br m, 120H, CH₃(C*H*₂)₁₅), 2.88 (t, 8H, ²*J*_{HH} = 7.9 Hz, *C*H₂Ar), 7.20-7.30 (br m, 4H, ²*J*_{HH} = 6.6 Hz, H*-5,5'), 7.52-7.60 (br m,, 4H, H3,3'), 8.31 (br s, 4H H6,6'). (FAB,⁺): m/z = 1522.16 [M-2Cl⁻]⁺. Anal. Calcd for C₈₈H₁₅₂Cl₂N₄Ru: C, 73.49; H, 10.65; N, 3.90. Found: C, 73.40; H, 10.54; N, 3.83.

**[Ru(4,4'-ditridecyl-2,2'-dipyridine)₂(H₂O)₂](NO₃) ₂ (2a) and [Ru(4,4'-dihexadecyl-2,2'-dipyridine)₂(H₂O)₂](NO₃)₂ (2b).** We subsequently reacted **1a** and **1b** with a stoichiometric amount of AgNO₃, first at a low (-5 to 10 °C) and then at a mild (20 to 60 °C) temperature, and then added traces of water, to replace the chlorides by solvent (water) molecules and weakly coordinating anions (NO₃), thereby generating charged complexes **2a** and **2b.** As a result, these complexes can self-aggregate in apolar solvents and their reactivity is improved at the same time, because the water ligands will dissociate better than the chlorides.

Compound **2a:** MS (FAB⁺): m/z = 1240,91 [M-NO₃]⁺, 1223,93 [MH-H₂O-NO₃]⁺. Anal. Calcd. for C₇₂H₁₂₄N₆O₈Ru: C, 66.37; H, 9.59; N, 6.45. Found: C, 66.64; H, 9.71; N, 6.33. Compound **2b:** MS (FAB⁺): m/z = 1465.16 [M-NO₃]⁺, 1448.17 [MH-H₂O-NO₃]⁺. Anal. Calcd. for C₈₈H₁₅₆N₆O₈Ru: C, 69.20; H, 10.30; N, 5.50. Found: C, 68.95; H, 10.17; N, 5.37.

### Example 2

### Polymerization of styrene

Styrene polymerizations were carried out in a closed Schlenk vessel under N₂ atmosphere and can advantageously work in the presence of O₂. The appropriate amount of catalyst was dissolved in degassed styrene (final volume, 3 ml) and immediately placed in a preheated oil bath.

Tables 1 and 2 collect the performance of catalysts **2a** and **2b**, respectively, in the polymerization of styrene. The yields of polystyrene obtained are good, ranging from 50-99%, improving as temperatures rise. The most remarkable aspect is that the polymers produced have high molecular weights (> 10⁶).

**Table 1. Polymerization of styrene with 2a^{a}**

| | | | | results | | |
|---|---|---|---|---|---|---|
| Entry | T (°C) | conc. (M) | time (h) | conv (%)^{b} | *M_{w}^{c}* | *M_{w}*/*Mₙ^{c}* |
| 1 | 50 | 10⁻³ | 24 | 48 | 220 000 | 1.6 |
| 2 | 50 | 10⁻⁴ | 24 | 33 | 960 000 | 1.6 |
| 3 | 50 | 5 x 10⁻⁵ | 24 | 30 | 1 100 000 | 1.6 |
| 4 | 50 | 10⁻⁵ | 24 | 23 | 1 320 000 | 1.6 |
| 5 | 60 | 10⁻⁴ | 24 | 50 | 470 000 | 1.6 |
| 6 | 70 | 10⁻³ | 24 | 96 | 170 000 | 1.6 |
| 7 | 70 | 5 x 10⁻⁴ | 24 | 78 | 210 000 | 1.6 |
| 8 | 70 | 10⁻⁴ | 24 | 61 | 390 000 | 1.6 |
| 9 | 70 | 5 x 10⁻⁵ | 24 | 53 | 450 000 | 1.5 |
| 10 | 70 | 2 x 10⁻⁵ | 24 | 49 | 540 000 | 1.6 |
| 11 | 70 | 10⁻⁵ | 24 | 47 | 630 000 | 1.7 |
| 12 | 90 | 10⁻⁴ | 12 | 64 | 100 000 | 1.6 |
| 13 | 90 | 10⁻⁴ | 24 | 84 | 120 000 | 1.7 |
| 14 | 110 | 10⁻⁴ | 4 | 53 | 60 000 | 1.5 |
| 15 | 110 | 10⁻⁴ | 24 | 98 | 70 000 | 1.6 |
| 16^{d} | 50 | 10⁻⁴ | 24 | 24 | 250 000 | 1.6 |
| 17^{e} | 70 | 10⁻⁴ | 24 | 35 | 120 000 | 1.8 |
| 18^{f} | 70 | 10⁻⁴ | 24 | 51 | 150 000 | 1.9 |
| 19⁹ | 70 | 10⁻⁴ | 24 | 7 | 40 000 | 1.8 |

| | | | | | | |
|---|---|---|---|---|---|---|
| ^{a)} All reactions carried out in neat styrene unless otherwise stated. ^{b)} From GC, using hexadecane as IS. ^{c)} From SEC chromatography. ^{d)} styrene:toluene 1:1 (v/v). ^{e)} With CCl₃Br as initiator, 40 mM. ^{f)} With Cl₃CCOOCH₃ as initiator, 40 mM. ^{e)} With CHI₃ as initiator, 40 mM. | | | | | | |

**Table 2. Polymerization of styrene with 2b^{a}**

| | | | | results | | |
|---|---|---|---|---|---|---|
| Entry | initiator | conc. (M) | time (h) | conv (%) | *M_{w}* | *M_{w}*/*Mₙ* |
| 1 | 50 | 10⁻³ | 24 | 54 | 180 000 | 1.6 |
| 2 | 50 | 10⁻⁴ | 24 | 38 | 680 000 | 1.6 |
| 3 | 50 | 5 x 10⁻⁵ | 24 | 35 | 920 000 | 1.6 |
| 4 | 50 | 10⁻⁵ | 24 | 25 | 1 500 000 | 1.6 |
| 5 | 60 | 10⁻⁴ | 24 | 57 | 330 000 | 1.6 |
| 6 | 70 | 10⁻³ | 24 | 81 | 145 000 | 1.6 |
| 7 | 70 | 5 x 10⁻⁴ | 24 | 78 | 210 000 | 1.6 |
| 8 | 70 | 10⁻⁴ | 24 | 67 | 240 000 | 1.5 |
| 9 | 70 | 5 x 10⁻⁵ | 24 | 61 | 300 000 | 1.5 |
| 10 | 70 | 2 x 10⁻⁵ | 24 | 56 | 440 000 | 1.6 |
| 11 | 70 | 10⁻⁵ | 24 | 49 | 610 000 | 1.7 |
| 12 | 90 | 10⁻⁴ | 12 | 64 | 100 000 | 1.6 |
| 13 | 90 | 10⁻⁴ | 24 | 90 | 105 000 | 1.7 |
| 14 | 110 | 10⁻⁴ | 4 | 58 | 40 000 | 1.5 |
| 15 | 110 | 10⁻⁴ | 24 | 99 | 50 000 | 1.6 |
| 16^{d} | 50 | 10⁻⁴ | 24 | 25 | 260 000 | 1.4 |
| 17^{e} | 70 | 10⁻⁴ | 24 | 35 | 120 000 | 1.8 |
| 18^{f} | 70 | 10⁻⁴ | 24 | 51 | 150 000 | 1.9 |
| 19⁹ | 70 | 10⁻⁴ | 24 | 6 | 40 000 | 1.8 |

| | | | | | | |
|---|---|---|---|---|---|---|
| ^{a)} All reactions carried out in neat styrene unless otherwise stated. ^{b)} From GC, using hexadecane as IS. ^{c)} From SEC chromatography. ^{d)} styrene:toluene 1:1 (v/v). ^{e)} With CCl₃Br as initiator, 40 mM. ^{f)} With Cl₃CCOOCH₃ as initiator, 40 mM. ^{e)} With CHI₃ as initiator, 40 mM. | | | | | | |

In contrast to conventional systems, it is surprising that reagents that are normally used as initiators do not improve the performance of the reactions (entries 17-19), they seem to retard the reaction (entries 17 and 18) and in some cases even to deactivate (entries 19) the catalytic performances of the catalysts. These initiators are generally toxic and it is advantageous that a method can work in the absence of these chemicals.

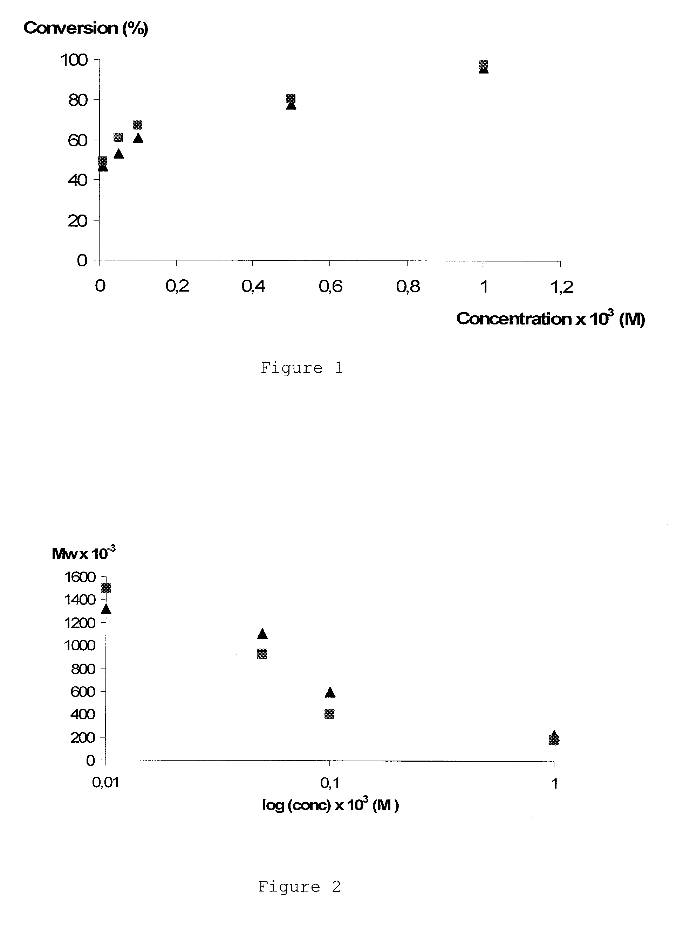

Figure 1 depicts the relationship between the catalyst concentration and the polystyrene conversion. Clearly, the conversions improve as the catalyst's concentration is increased. Higher conversions are obtained with more concentrated samples, as also seen in entries 1 to 4 as in living radical polymerizations.

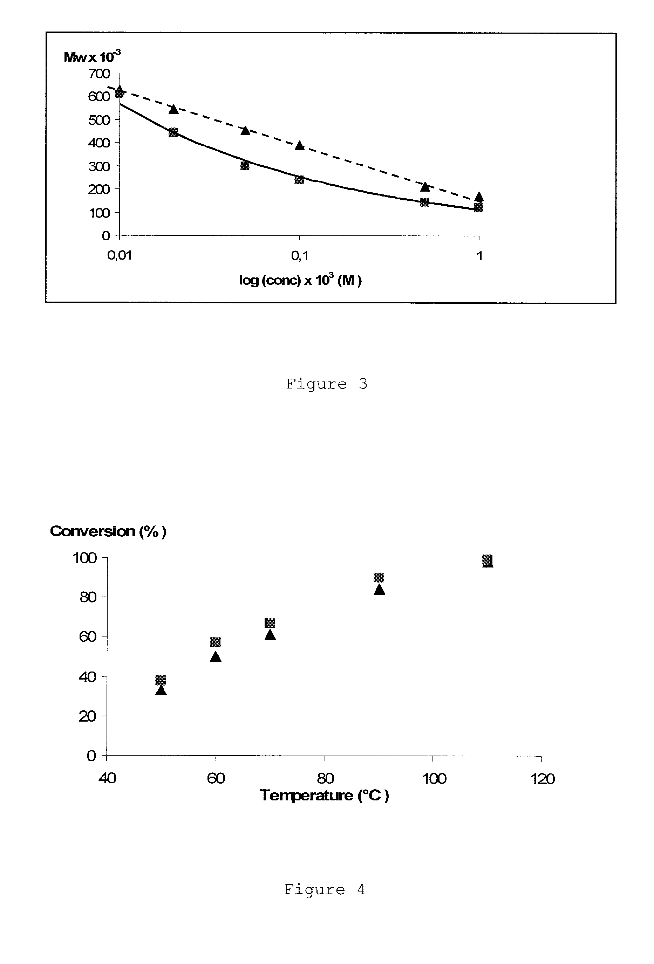

Figures 2 and 3 show the evolution of the molecular weights of the polymers obtained at different concentrations and at constant temperature. The polymers with the highest molecular weights are obtained at the lowest catalyst concentrations. A drawback of operating at low concentrations is that the polymerization rates are slower.

Assuming again that the molecular weight is proportional to the square root of the concentration of the catalyst, then molecular weights will be higher when reactions are performed in bulk solutions with respect to solutions where styrene is diluted. This is indeed the case as evident from entry 16; lower molecular weights are achieved in toluene/styrene systems with respect to reactions under bulk conditions. Therefore, good results are achieved when working in neat substrates, but the system still works when monomer is diluted.

As deducted from tables 1 and 2, conversions are higher when reactions are carried out at high temperatures. This relationship between conversions and reaction temperatures at constant concentrations is depicted in figure 4. According to the mechanism followed by controlled radical transfer polymerization reactions, the temperature plays an important role as it can be tuned to obtain either high molecular weight polymers or high conversions. If the catalyst concentration is kept constant, conversions should increase as the reaction temperature is raised. Indeed, as expected for radical transfer polymerizations, the performance of our catalysts improves at higher temperatures.

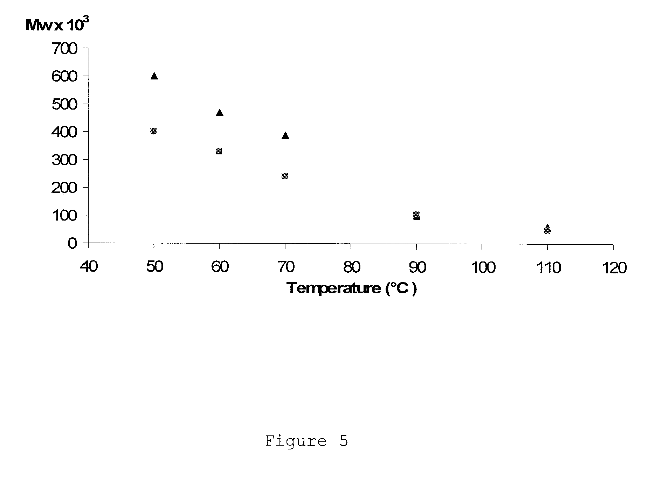

An additional effect of the temperature in controlled radical polymerizations is that the average molecular weight of the polymers decreases as the temperature increases. As depicted in figure 5, this is indeed the case: lower molecular weights are obtained with both catalysts when higher temperatures are employed.

However, one can establish a certain influence of aggregates at high concentrations. The essential difference between solutions of **2a** and **2b** in neat styrene is that only the latter undergoes self-assembly in solution and these aggregates are likely to influence the outcome of the reaction. This difference can be seen in figure 4. Such a representation is typically a linear decay in conventional (homogeneous) systems, which is the case when **2a** is used as catalyst. On the contrary, solutions of **2b** show an exponential decay. This means that at high concentrations, metallo-aggregates of **2b** favour the formation of smaller polymers with respect to solutions of **2a.** Therefore, the performance of the catalysts in view of their employment in homogeneous systems or emulsions, is different.

The polymerization reactions can thus be carried out in emulsions or homogeneously, as desired, in order to tune the molecular weights of the polymers when working at catalyst concentrations between 10⁻⁵ and 10⁻³. The catalyst concentrations employed are lower than those typically employed in living radical polymerization protocols.

All in all, our catalysts are good for polymerization reactions and follow the atom-transfer radical mechanism typical of living polymerizations. The polydispersities obtained are somewhat higher. However, the catalyst loads employed are lower, the molecular weights obtained are very high compared to traditional protocols and the catalysts do not need the assistance of toxic initiators.

## Claims

1. Metal catalyst for living radical polymerization having a structure M²⁺(Y)₄(X)₂, wherein M is a transition metal selected from the group of Mn, Fe, Co, Zr, Ru, Rh and Os, each Y independently is a nitrogen-containing aromatic mono-ring ligand, at least one ligand Y being substituted on at least one position with a carbon-containing substituent and, optionally, either two or four ligands Y being covalently bonded to each other in pairs, and X is selected from H₂O, CH₃CN, (CH₃) ₂SO, NH₃, and a mono-, di- or tri (C₁-C₄)-alkyl amine, with the proviso that the metal catalyst is not Ru²⁺(L¹)₂(OH₂)₂, Ru²⁺(L²)₂(OH₂)₂ and Ru²⁺(L³)₂(OH₂)₂, wherein L¹, L² and L³ have the structures as follows.

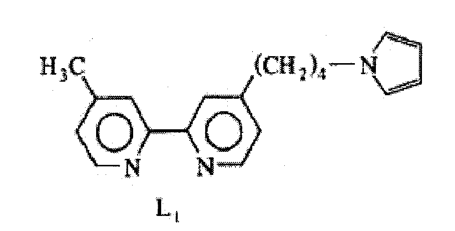

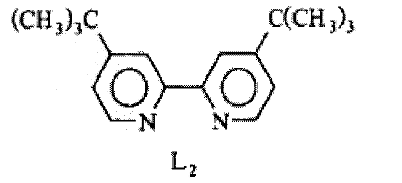

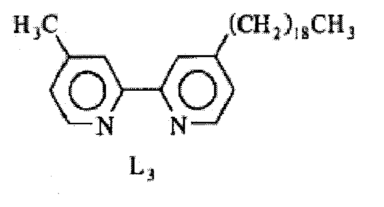

2. The metal catalyst of claim 1, wherein the transition metal is Ru.

3. The metal catalyst of any one of the preceding claims, wherein Y is pyridine.

4. The metal catalyst of any one of the preceding claims, wherein either two or four ligands Y are covalently bonded to each other in pairs.

5. The metal catalyst of claim 4, wherein two covalently bonded ligands Y form a dipyridinyl, preferably a (2,2')-dipyridinyl group.

6. The metal catalyst of any one of the preceding claims, wherein the substituent is present on the 4-position of Y.

7. The metal catalyst of any one of the preceding claims, wherein the carbon-containing substituent is an aliphatic, heteroaliphatic, or aliphatic-aromatic moiety, preferably an alkyl group of 1 to 32 carbon atoms, more preferably an alkyl group of 10 to 20 carbon atoms.

8. The metal catalyst of any one of the preceding claims, wherein X is H₂O.

9. The metal catalyst of any one of the preceding claims, wherein the metal catalyst is neutralized with a counter ion, preferably selected from NO₃⁻, SO₄²⁻, CF₃SO₃⁻, CF₃COO⁻, BF₄⁻, SbF₅⁻, and PF₆⁻.

10. A method for preparing the catalyst of any one of the preceding claims comprising reacting ligand Y with a metal halide to obtain a metal-ligand Y complex, digesting the complex with silver ions, adding compound X, and recovering the obtained metal catalyst, wherein Y and X have the meanings as defined in claim 1.

11. A method for polymerizing a vinyl group-containing monomer or a mixture of vinyl group-containing monomers to form a polymer or a copolymer, comprising the step of polymerizing the vinyl group-containing monomers in the presence of the metal catalyst of any one of claims 1-9.
